# EUROPEAN PATENT APPLICATION

(11) **EP 2 028 507 A1**
(43) Date of publication of application: **25.02.2009**
(21) Application number: 07114662.5
(22) Date of filing: 21.08.2007
(51) Int. Cl.: G01S 13/87, G06K 7/00

(54) **System for sensing a physical property in a plurality of scanning positions**

(71) Applicant: Koninklijke Philips Electronics N.V., 5621 BA Eindhoven (NL)
(72) Inventor: The designation of the inventor has not yet been filed
(74) Representative: Hatzmann, Martin

(57) **Abstract**

The invention relates to a system for sensing a physical property allocated to scanning positions (P00-P23, Pij) comprising sensors adapted to sense the physical property within sensing regions (31 - 35, 41 - 45, 51 - 55), wherein the sensing regions (31 - 35, 41 - 45, 51 - 55) are arranged such that each of the sensing regions (31 - 35, 41 - 45, 51 - 55) covers at least one scanning position (P00-P23, Pij), and are superposed on one another at least in one scanning position (P00-P23, Pij) such that each scanning position (P00-P23, Pij) is scanned by a unique pattern of sensing regions (31 - 35, 41 - 45, 51 - 55), wherein the number of sensing regions (31 - 35, 41 - 45, 51 - 55) is less than the number of scanning positions (P00-P23, Pij) and wherein the sensing regions (31 - 35, 41 - 45, 51 - 55) comprise at least three sets of sensing regions (30, 40, 50) with a common axis of symmetry, which sets of sensing regions (30, 40, 50) are mutually separated by an angle of rotation around the common axis of symmetry in which the angle of rotation between two nearest sets of sensing regions (30, 40, 50) fulfills the formula (180 degrees) / n, wherein n is the amount of sets of sensing regions (30, 40, 50). This provides for the determination of the location of the physical property with an improved resolution while maintaining a robust and accelerated localization process.

## Description

### FIELD OF THE INVENTION

The invention relates to a system for sensing a physical property allocated to scanning positions.

### BACKGROUND OF THE INVENTION

Sensing systems that comprise sensors with sensing regions arranged in a row-column configuration are commonly known. For instance, objects with built-in RFID tags can be cheaply localized in specific positions on a shelf or at specific terminals of a robotic delivery system, which shelves or terminals are swept by an arrangement of antennas configured in rows and columns. Each specific position is defined by the intersection of one row antenna with one column antenna.

WO 2006/109211 discloses a sensing system in which a physical property allocated to scanning positions is localized in a scanned area with sensors that are adapted to sense the physical property within sensing regions. The sensing regions are arranged such that each of them covers at least one scanning position, and are superposed on one another at least in one scanning position such that each scanning position is covered by a unique pattern of sensing regions. In this way the number of sensors to unambiguously sense and localize the physical property is considerably reduced compared to the commonly known sensing systems arranged in a row-column configuration. Furthermore, the localization speed is considerably accelerated since fewer localization steps have to be carried out to determine the location of the physical property in given scanning positions.

### SUMMARY OF THE INVENTION

It is an object of the invention to provide a system for sensing a physical property allocated to scanning positions in which the location of the physical property is determined with an improved resolution while maintaining the accelerated localization speed. The invention is defined by the independent claims. Advantageous embodiments are defined by the dependent claims.

This object is achieved by a system for sensing a physical property allocated to scanning positions comprising sensors adapted to sense the physical property within sensing regions, wherein the sensing regions are arranged such that each of the sensing regions covers at least one scanning position, and are superposed on one another at least in one scanning position such that each scanning position is scanned by a unique pattern of sensing regions, wherein the number of sensing regions is less than the number of scanning positions and wherein the sensing regions comprise at least three sets of sensing regions with a common axis of symmetry, which sets of sensing regions are mutually separated by an angle of rotation around the common axis of symmetry in which the angle of rotation between two nearest sets of sensing regions fulfills the formula (180 degrees) / n, wherein n is the amount of sets of sensing regions. This provides for a more accurate localization of the scanning positions because the at least three sets of sensing regions define a more refined grid of scanning positions with respect to the prior art. Also the advantage of the accelerated localization remains, because the number of sensing regions is also according to the invention less than the number of scanning positions which means that the number of localization steps is less than the number of scanning positions. Furthermore, the reliability and robustness of sensing the physical property with the sensing regions is not affected because the properties of the sensing regions, such as for example the size, do not need to be modified. Another advantage of the sensing system according to the invention is that the total area that is scanned is not restricted to rectangular area, but also, for example, hexagonal or circular areas may be scanned.

The scanning position is defined as a point, a line, an area, or a 3-dimensional configuration where the physical property can be sensed. Measuring of the physical property is not limited to analog values but may also be resolved down to digital and even to binary values (e.g. the presence or absence of an object with a given property) or may be a change of state of said binary values (e.g. appearance or disappearance of an object). The term 'physical property' as used herein comprises, for example, pressure, electrical resistance, etc., but comprises also identity codes or the like. A plurality of scanning positions may be arranged in a straight or curved line, or in a 2-dimensional or 3-dimensional arrangement.

The invention provides the advantage that the number of sensors to be used to unambiguously sense and localize a given physical property in scanning positions is considerably reduced compared with known systems. The reduced number of sensors requires less wiring from the sensors to detectors therefore reduces the production cost and renders it possible to design smaller systems. The considerably accelerated localization speed obtained in the prior art is preserved because just as in the prior art a small amount of localization steps has to be carried out to determine the location of the physical property in given scanning positions.

It should be observed that the sensing system according to the invention is useful in determining either the location of a physical property in one of a plurality of scanning positions or in all scanning positions but one, or to successively determine the location of different physical properties in different scanning positions, provided each of the physical properties is uniquely identifiable by the sensors, e.g. by a unique range of values of the property, a unique identity number, or the like.

In an embodiment of the system for sensing a physical property according to the invention the sensing regions comprise three sets of sensing regions. This provides for a uniformly distributed grid of triangular areas in which the scanning positions are located. By applying a ternary search method for the localization of the physical property, the accelerated localization speed is safeguarded.

In an embodiment of the system for sensing a physical property according to the invention the physical property comprises identity codes of RFID transponders of objects, and the sensors are configured as antennas designed for reading the identity codes of the RFID transponders. Such a sensing system is highly flexible at low production cost, since antennas for RFID transponders (tags) can be produced cheaply with different shapes and aspect ratios, so that varying shapes of scanning positions can be sensed within one sensing system according to the invention, offering the possibility to adapt the system to almost any conceivable needs without appreciable extra cost. For instance, the antennas may be formed by bending of wires or by applying electrically conductive pastes or inks onto a carrier. It should be noted that the invention is not limited to identity codes of RFID tags. A physical property in the inventive sense may indeed be any data linked to an object, which data may be transmitted by various methods. An object with a barcode is mentioned as just one example of this. Here data associated with the object is read optically. An object comprising a unique arrangement of magnetic elements may also be mentioned, which unique arrangement identifies said object. Finally, an object comprising an active transmitter is mentioned, which transmitter broadcasts the object's identity code sequentially, for example by means of an infrared diode. In particular the last example shows that there is no clear borderline between localizing of objects and localizing of physical properties. Said infrared code may come from an object on a game board, i.e. the signal is generated in the vicinity of the sensor, or it may alternatively be generated "remotely", i.e. the position of the infrared code on the sensor array does not directly imply a position of a certain object.

In an embodiment of the system for sensing a physical property according to the invention the object comprises at least two RFID transponders. This advantageously increases the robustness of the localization of the object, because in the case that one of the RFID transponders is located on the border of two scanning positions, the localization of the object is still guaranteed because the other RFID transponder will be located. Another advantage is that this enables not only the localization of the object but also the detection of the orientation of the object.

In an embodiment of the system for sensing a physical property according to the invention the sensors are configured as substantially rectangular antenna loops. This is a very easy manufacturable implementation of the sensors which can be produced at low cost.

In an embodiment of the system for sensing a physical property according to the invention the sensing results of the sensing regions are transmitted via sensing signals, and wherein the sensing signals are fed to a detector that is adapted to allocate each sensing signal to a different digit of a position code. These measures provide the advantage that the result of the sensing operation is a position code that uniquely defines that scanning position where the physical property was sensed, or that scanning position where the physical property was not sensed (=negative sensing). Since the sensing regions are superposed on each of the scanning positions in a unique pattern and the sensing result of each sensing region is allocated to a different digit of the position code, the resulting position codes are inevitably unique for each scanning position. However, the following restrictions are to be noted: if all scanning positions are sensed for the same physical property, then the physical property is only allowed to appear in one of the scanning positions, or in all scanning positions but one. If the scanning positions are successively searched for different physical properties, for example different identity codes of RFID tags or different colors of a light beam, then the different physical properties may appear in different scanning positions. The present sensing system may comprise a detector adapted to discriminate binary values from the sensing signals and to allocate the binary values to the respective digits of the position code, so that binary position codes are created. The detector applies a predefined criterion in discriminating whether the sensing results are to be interpreted as "sensed" or "not-sensed", and enters the binary result into each of the digits of the position code. Examples of suitable criterions are a defined threshold being exceeded or a sensed identity code matching a predefined identity code. If the detector of the present sensing system is adapted to allocate the sensing signals as discrete numbers to the respective digits of the position code, a wider variety of sensors can be used in embodiments of the invention, comprising not only digital sensors that deliver a binary TRUE/FALSE result of their sensing, but also analog sensors whose analog sensing signals are converted by the detector into discrete numbers which are entered into the respective digits of the position codes, so that the sensing result can be evaluated with high resolution.

In an embodiment of the system for sensing a physical property according to the invention the system further comprises a sensor with a sensing region which covers the entirety of scanning positions. This advantageously provides for a quick detection whether a physical property is present in the to be scanned area.

### BRIEF DESCRIPTION OF THE DRAWINGS

These and other aspects of the invention will be further elucidated and described with reference to the drawings, in which:
Fig. 1 is a schematic view of a game board with a known arrangement of antennas for localizing a token placed in one of a plurality of game board positions;
Figs. 2a-d are schematic views of a system for sensing and localizing a physical property within a substantially circular area according to an embodiment of the invention; and
Fig. 3 is a schematic view of a system for sensing and localizing a physical property within a hexagonal area according to an embodiment of the invention.

The Figures are not drawn to scale. In general, identical components are denoted by the same reference numerals in the Figures.

### DETAILED DESCRIPTION OF EMBODIMENTS

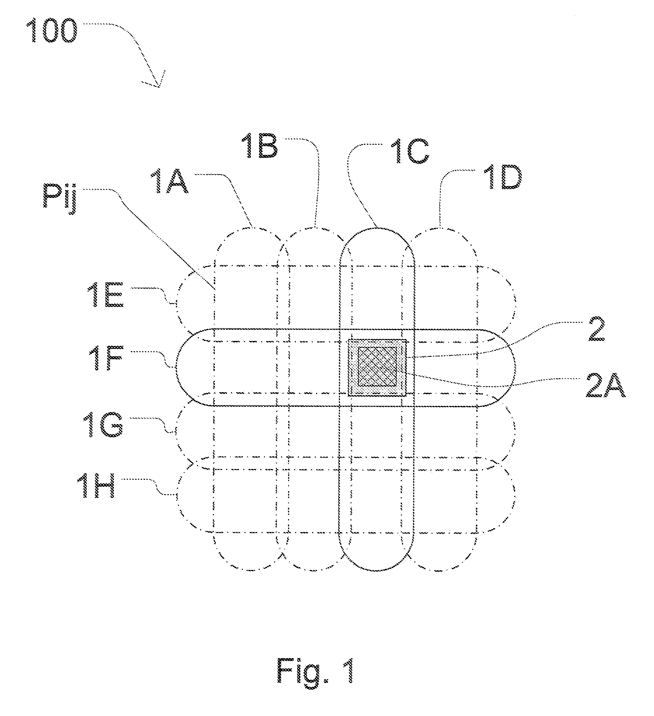

Fig. 1 shows a schematic view of a known sensing system with a sensing area 100 with sixteen scanning positions Pij, in which i represents the column number and j the row number, arranged in a 4 x 4 matrix. An object or token 2 with a built-in RFID tag 2A is placed in one of these scanning positions Pij. The scanning positions Pij of the sensing area 100 are located in rectangular areas and are scanned by four mainly rectangular antenna sensors 1A - 1D arranged adjacent to each other in a column configuration and by four mainly rectangular antenna sensors 1E - 1H arranged adjacent to each other in a row configuration. In this way the antenna sensors 1A - 1H define rectangular sensing regions within the sensing area 100 that correspond to the scanning positions Pij. Other more efficient scanning arrangements are known in the art. For example, WO 2006/109211 discloses a scanning arrangement in which the number of sensors to unambiguously sense and localize an RFID tag in scanning positions is considerably reduced with respect to the example of Fig. 1 and in which the sensing regions do not coincide with the scanning positions.

An example of a known scanning process for the sensing area 100 is explained now. First, all columns i are scanned by successively activating antenna sensors 1A to 1D, querying whether one or more of the mainly rectangular antenna sensors 1A to 1D, corresponding to the first to fourth column, receive a detection signal from the RFID tag 2a. In this example only antenna 1C, which scans the third column, receives a signal from RFID tag 2a. Next, all rows j are scanned by successively activating antenna sensors 1E to 1H, corresponding to the first to fourth row, querying whether one or more of these mainly rectangular antenna sensors 1E to 1H receive a detection signal from the RFID tag 2a. In this example only antenna sensor 1F, which scans the second row, receives a signal from RFID tag 2a. The scanning position where the token 2 is present has thus been determined as being the scanning position P32 corresponding to the third column, which is represented by antenna sensor 1C, and the second row, which is represented by antenna sensor 1F. As will be recognized, in this example eight scanning steps were necessary to achieve this result.

An activated antenna sensor 1A - 1H radiates a radio frequency (RF) signal at an operating frequency of the RFID tag 2a. This RF signal is received by an internal antenna of the RFID tag 2a where it, in case of a passive RFID tag 2a, provides for the power of the RFID tag 2a. The RFID tag 2a subsequently transmits a response signal which is received by the activated antenna sensor 1A - 1H and converted to the detection signal by which it is derived that the token 2 is present in the area covered by the activated antenna sensor 1A - 1H. The response signal of the RFID tag 2a may also comprise information from which a specific identity code of the RFID tag 2a can be derived. This allows for the detection of a plurality of RFID tags 2a.

In an alternative embodiment the RFID tag 2a does not actively transmit a response signal, but instead it changes the absorption of the RF signal in a specific way and thereby changes the antenna load of the activated antenna sensor 1A - 1H. The specific change of the antenna load by the RFID tag 2a is a measure for the specific identity code of the RFID tag 2a.

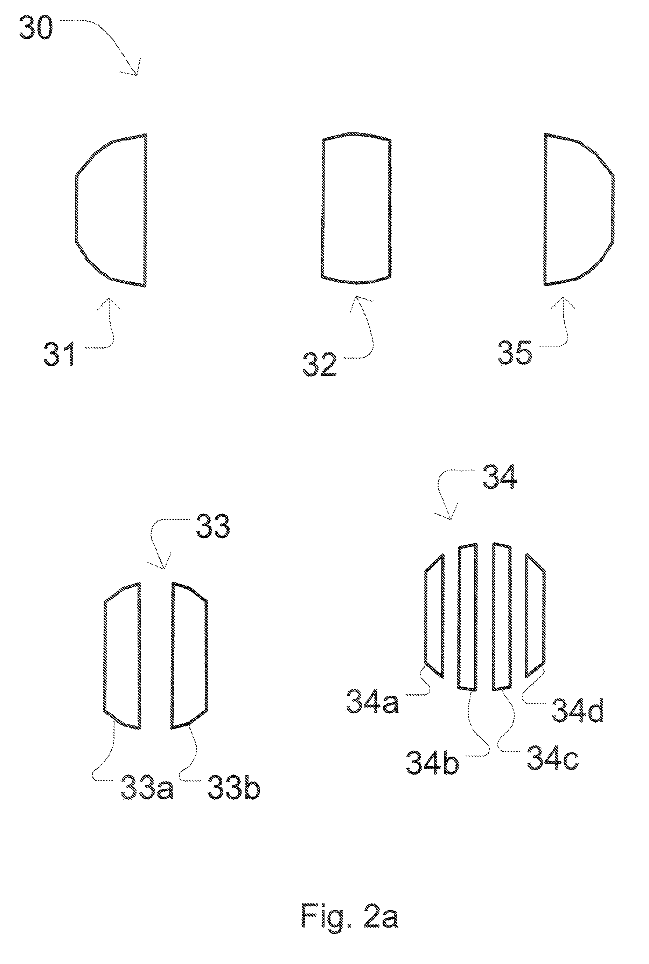

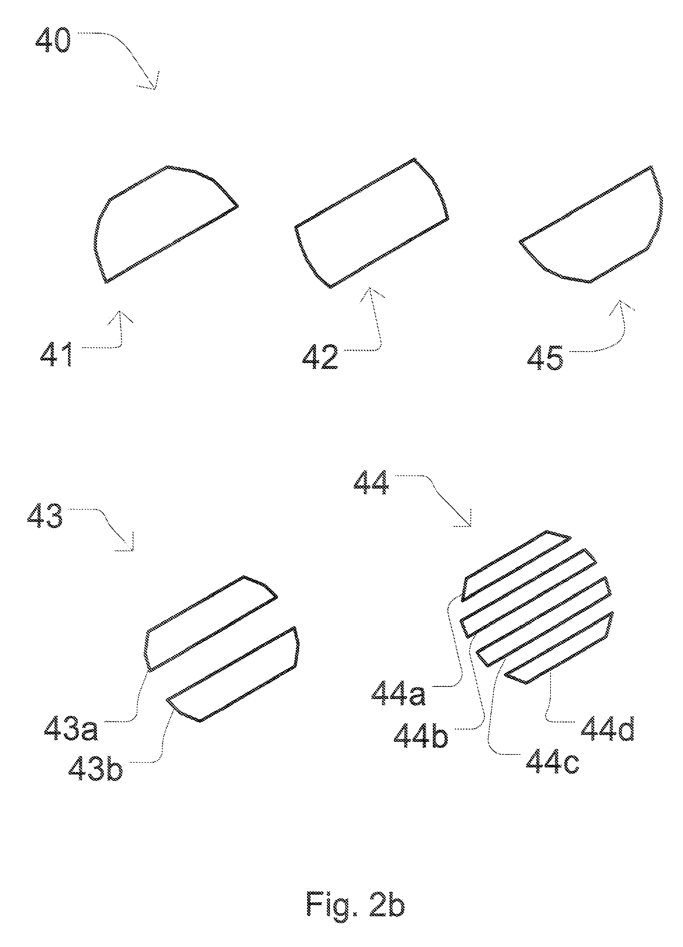

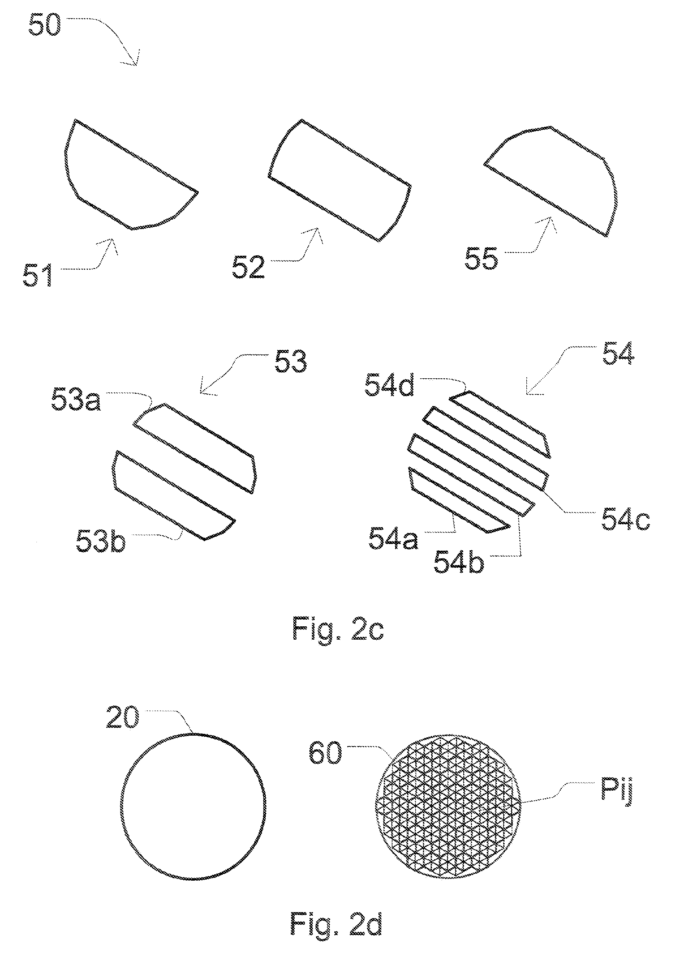

A more efficient sensor arrangement according to the invention is illustrated in Figs. 2a-d. As is shown in Fig. 2d, a circular scanning area 60 is divided into triangular scanning positions Pij. This is achieved by superimposing three different set of sensors 30, 40 and 50 each comprising five different sensing regions. The first set of sensors 30 comprises, as is shown in Fig. 2a, sensing regions 31, 32 and 35, in this example configured as antenna loops, and sensing regions 33 and 34, in which sensing region 33 comprises two antenna loops 33a and 33b and in which sensing region 34 comprises four antenna loops 34a, 34b, 34c, and 34d, wherein each antenna loop has two parallel sides. The second set of sensors 40 comprises, as is shown in Fig. 2b, sensing regions 41, 42 and 45, in this example configured as antenna loops, and sensing regions 43 and 44, in which sensing region 43 comprises two antenna loops 43a and 43b and in which sensing region 44 comprises four antenna loops 44a, 44b, 44c, and 44d, wherein each antenna loop has two parallel sides. The sensing regions 41, 42, 43, 44 and 45 are obtained by rotating each of the sensing regions 31, 32, 33, 34 and 35 over an angle of 60 degrees around the centre of the circular scanning area 60, as is illustrated in Fig. 2b. The third set of sensors 50 comprises, as is shown in Fig. 2c, sensing regions 51, 52 and 55, in this example configured as antenna loops, and sensing regions 53 and 54, in which sensing region 53 comprises two antenna loops 53a and 53b and in which sensing region 54 comprises four antenna loops 54a, 54b, 54c, and 54d, wherein each antenna loop has two parallel sides. The sensing regions 51, 52, 53, 54 and 55 are obtained by rotating each of the sensing regions 31, 32, 33, 34 and 35 over an angle of -60 degrees around the centre of the circular scanning area 60, as is illustrated in Fig. 2c. Superimposing the first, second and third sets of sensors 30, 40, 50 results in the triangular subdivision of the circular scanning area 60 as is illustrated in Fig. 2d. Advantageously, as is shown in Fig. 2d, a circular antenna loop 20 may be added that covers the circular scanning area 60. This circular antenna loop 20 is conveniently used to detect in a quick and efficient way whether the scanning area comprises a to be sensed physical property or to detect a change in the number of physical properties that are allocated to scanning positions Pij within the scanning area. This set of sensors comprises in total fifteen different sensing regions 31, 32, 33, 34, 35, 41, 42, 43, 44, 45, 51, 52, 53, 54, 55 by which 390 different scanning positions Pij can be detected, which safeguards the high localization speed. In this way the sensing system according to the invention results in an improved resolution for the localization of the physical property compared to the row-column configuration. It is noted that in a more practical sensor arrangement the antenna loops may be rectangular.

Other sensor arrangements, wherein each set of sensing regions comprises more or less sensing regions and/or where the angle of rotation between the different sets of sensing regions is different, can be conveniently designed and adapted to the required accuracy and speed of the sensing system.

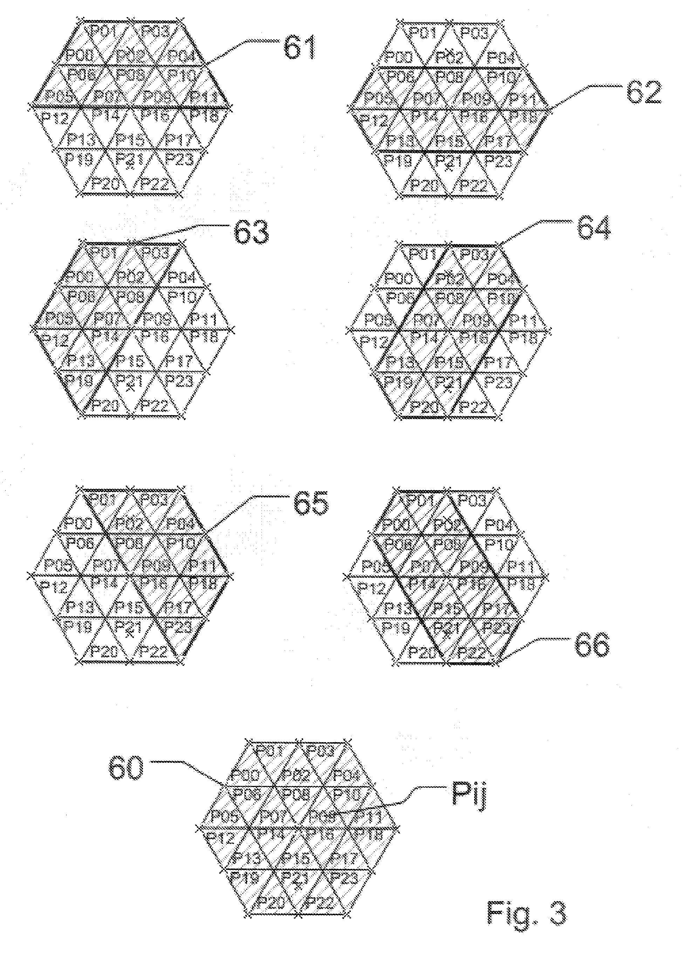

Another sensor arrangement according to the invention is illustrated in Fig. 3 which is a relatively simple example used to explain a method of sensing a physical property allocated to scanning positions. In this embodiment a hexagonal scanning area 70, which is for example a game board, is divided into 24 triangular scanning positions P00 - P23 on which one or more objects with specific properties can be placed. The scanning positions P00 - P23 are arranged in a hexagonal configuration. In the present embodiment, the sensing system is adapted as a system for localizing the object that has the predefined physical property within one of the scanning positions P00 - P23. In this example, the object is configured as token 2 with a built-in RFID tag 2A. Each scanning position is identified by a unique binary position code BC, as will be explained below. The system for localizing the token 2 comprises three sets of sensing regions defined as sensing regions 61, 62, 63, 64, 65 and 66, which in this embodiment are configured as antennas for sensing a property of the token 2, which property in this embodiment is an identity code to be read out from the RFID tag 2A. It should be noted that identity codes stored in RFID tags 2A are usually unique, so it is practicable to put more than one token on the board, each having an RFID tag 2A with a unique identity code, and to localize all of them by repeating the localization process for each token. Furthermore, in another embodiment two tokens 2 can be built into the RFID tag 2A which increases the robustness of the localization process and adds the functionality of detecting the orientation of the token 2 on the board. It should further be noted that, although in this embodiment of the invention the shape of the antenna loops coincide with the sensing regions 61 - 66, this is not a necessary feature. The sensing regions 63 and 64 are rotated 60 degrees around the centre of the hexagonal scanning area 60 with respect to the sensing regions 61 and 62. The sensing regions 65 and 66 are rotated -60 degrees around the centre of the hexagonal scanning area 60 with respect to the sensing regions 61 and 62.

According to the invention, the sensing regions 61 - 66 are arranged such that each sensing region 61 - 66 covers at least one scanning position P00 - P23. Sensing region 61 covers the scanning positions P00, P01, P02, P03, P04, P05, P06, P07, P08, P09, P10 and P11. Sensing region 62 covers the scanning positions P05, P06, P07, P08, P09, P10, P11, P12, P13, P14, P15, P16, P17 and P18. Sensing region 63 covers the scanning positions P00, P01, P02, P03, P05, P06, P07, P08, P12, P13, P14 and P19. Sensing region 64 covers the scanning positions P02, P03, P04, P07, P08, P09, P10, P13, P14, P15, P16, P19, P20 and P21. Sensing region 65 covers the scanning positions P01, P02, P03, P04, P08, P09, P10, P11, P16, P17, P18 and P23. Sensing region 66 covers the scanning positions P00, P01, P02, P06, P07, P08, P09, P14, P15, P16, P17, P21, P22 and P23. Furthermore, the sensing regions 61 - 66 overlap one another at least at some of the scanning positions P00 - P23, such that each of the scanning positions P00 - P23 is covered by a combination of sensing region(s) 61 - 66 that differs from the sensing regions 61 - 66 or their combinations for all other scanning positions P00 - P23, so that all scanning positions P00 - P23 are covered by a unique pattern of sensing regions 61 - 66.

When configured as antennas, the sensors allocated to the sensing regions 61 - 66 are successively activated so that they radiate an electromagnetic field which is modulated by the RFID tag 2A according to its identity code when present within the sensing region 61 - 66. Each sensor outputs a sensing signal that contains information denoting modulation or no modulation of the electromagnetic field by the RFID tag 2A, so that it can be derived from these sensor signals whether or not the token 2 with the RFID tag 2A is present within the sensing region 61 - 66 of the corresponding sensor. In this embodiment the sensor signals may also contain information from which the specific identity code of the RFID tag 2A can be derived.

The sensor signals are fed to a multiplexer (no shown) which is connected to a detector (not shown). The detector controls the successive activation of the sensors that are allocated to the sensing regions 61 - 66 and analyzes the information contained in the sensor signals in order to localize the scanning position P00 - P23 where the token 2 is present, provided it is actually positioned on the board. In the present embodiment of the invention, the detector discriminates the sensor signals to binary values indicating whether or not the property of the token 2 was detected in the respective sensing region 61 - 66. For this discrimination, the detector applies the criterions whether an identity code of the RFID tag 2A could be sensed, and if so, whether it corresponds to a predefined identity code. The detector outputs the result of its localizing operation as a binary position code BC, wherein each digit is allocated to a different sensing region 61 - 66, so that the position code BC uniquely identifies the one scanning position P00 - P23 where the token 2 is placed, or outputs a null signal if no token 2 can be found on the board.

The operation mode of the detector and the efficient scanning process will now be explained in detail with reference to table I. The detector successively activates the sensors allocated to the sensing regions 61 - 66, and queries the resulting output sensing signals. The detector allocates each of the sensor signals originating from the sensors corresponding to the sensing regions 61 - 66 (transformed into binary values) to one digit of a binary position code BC. For each sensing signal which indicates that the token 2 is present within the sensing region 61 - 66, the allocated digit of the binary position code BC is set to 1. On the other hand, for each sensing signal 61 - 66 which indicates that the token 2 is not present within the sensing region 61 - 66, the allocated digit of the binary position code BC is set to 0. Table I contains columns for each sensing region 61 - 66 indicating if the sensor corresponding to the sensing region 61 - 66 has detected that the token 2 is present within the sensing region 61 - 66, represented by "Y", or is not present, represented by "N". Table I furthermore lists all values of the binary position code BC together with the corresponding scanning positions P00 - P23. It will be appreciated that the localization process is very efficient and that only six localization steps are needed to detect the scanning position Pij of the physical property. Furthermore, the triangular areas result in a more accurate localization of the scanning position compared to the rectangular areas.

**Table I**

| Sensing region | | | | | | | |
|---|---|---|---|---|---|---|---|
| 61 | 62 | 63 | 64 | 65 | 66 | BC | Pij |
| Y | N | Y | N | N | Y | 101001 | P00 |
| Y | N | Y | N | Y | Y | 101011 | P01 |
| Y | N | Y | Y | Y | Y | 101111 | P02 |
| Y | N | Y | Y | Y | N | 101110 | P03 |
| Y | N | N | Y | Y | N | 100110 | P04 |
| Y | Y | Y | N | N | N | 111000 | P05 |
| Y | Y | Y | N | N | Y | 111001 | P06 |
| Y | Y | Y | Y | N | Y | 111101 | P07 |
| Y | Y | Y | Y | Y | Y | 111111 | P08 |
| Y | Y | N | Y | Y | Y | 110111 | P09 |
| Y | Y | N | Y | Y | N | 110110 | P10 |
| Y | Y | N | N | Y | N | 110010 | P11 |
| N | Y | Y | N | N | N | 011000 | P12 |
| N | Y | Y | Y | N | N | 011100 | P13 |
| N | Y | Y | Y | N | Y | 011101 | P14 |
| N | Y | N | Y | N | Y | 010101 | P15 |
| N | Y | N | Y | Y | Y | 010111 | P16 |
| N | Y | N | N | Y | Y | 010011 | P17 |
| N | Y | N | N | Y | N | 010010 | P18 |
| N | N | Y | Y | N | N | 001100 | P19 |
| N | N | N | Y | N | N | 000100 | P20 |
| N | N | N | Y | N | Y | 000101 | P21 |
| N | N | N | N | N | Y | 000001 | P22 |
| N | N | N | N | Y | Y | 000011 | P23 |

It should be observed that in some applications of the invention it may not be necessary to detect the exact scanning position, but it may suffice to detect, for example, a specific part of the board in which the token 2 is positioned. For such applications the sensing system may decide to stop at any time when the required accuracy has been reached.

An efficient method of manufacturing sensing regions according to the invention comprises providing a substrate wherein a sensing region, for example comprising one or more antenna loops, is printed on a first surface of the substrate and a further sensing region, for example comprising one or more antenna loops providing an antenna arrangement different from the antenna arrangement on the top surface of the substrate, is printed on a second surface opposite to the first surface, wherein preferably the centre of rotation of the sensing region and the further sensing region coincide. This method provides for the printing of only one layer per main surface of the substrate, which is a simplification compared to the well-known methods in which two or more layers are printed and stacked on one substrate surface. A set of sensing regions is then provided by a stack of one or more substrates. According to an embodiment of the invention three of these sets of sensing regions, provided for by three stacks of substrates, are stacked wherein a second set of sensing regions, comprising a second stack of substrates, is rotated by 60 degrees around it centre of rotation with respect to a first set of sensing regions, comprising a first stack of substrates, and wherein a third set of sensing regions, comprising a third stack of substrates, is rotated by -60 degrees around its centre of rotation with respect to the first set of sensing regions. In this way an efficient and simple method of manufacturing sensing regions used in a system for sensing a physical property are provided, by printing on each of the two main surfaces of a substrate different antenna arrangements or loops and by subsequently stacking and rotating a multiple of these substrates.

In summary, a system for sensing a physical property allocated to scanning positions comprising sensors adapted to sense the physical property within sensing regions, wherein the sensing regions are arranged such that each of the sensing regions covers at least one scanning position, and are superposed on one another at least in one scanning position such that each scanning position is scanned by a unique pattern of sensing regions, wherein the number of sensing regions is less than the number of scanning positions and wherein the sensing regions comprise at least three sets of sensing regions with a common axis of symmetry, which sets of sensing regions are mutually separated by an angle of rotation around the common axis of symmetry in which the angle of rotation between two nearest sets of sensing regions fulfills the formula (180 degrees) / n, wherein n is the amount of sets of sensing regions. This provides for the determination of the location of the physical property with an improved resolution while maintaining a robust and accelerated localization process.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of other elements or steps than those listed in a claim. The word "a" or "an" preceding an element does not exclude the presence of a plurality of such elements.

## Claims

1. A system for sensing a physical property allocated to scanning positions (P00-P23, Pij) comprising sensors adapted to sense the physical property within sensing regions (31 - 35, 41 - 45, 51 - 55), wherein the sensing regions (31 - 35, 41 - 45, 51 - 55) are arranged such that each of the sensing regions (31 - 35, 41 - 45, 51 - 55) covers at least one scanning position (P00-P23, Pij), and are superposed on one another at least in one scanning position (P00-P23, Pij) such that each scanning position (P00-P23, Pij) is scanned by a unique pattern of sensing regions (31 - 35, 41 - 45, 51 - 55), wherein the number of sensing regions (31 - 35, 41 - 45, 51 - 55) is less than the number of scanning positions (P00-P23, Pij) and wherein the sensing regions (31 - 35, 41 - 45, 51 - 55) comprise at least three sets of sensing regions (30, 40, 50) with a common axis of symmetry, which sets of sensing regions (30, 40, 50) are mutually separated by an angle of rotation around the common axis of symmetry in which the angle of rotation between two nearest sets of sensing regions (30, 40, 50) fulfills the formula (180 degrees) / n, wherein n is the amount of sets of sensing regions (30, 40, 50).

2. A system for sensing a physical property as claimed in claim 1, in which the sensing regions (31 - 35, 41 - 45, 51 - 55) comprise three sets of sensing regions (30, 40, 50) wherein the scanning position is located in a triangular area.

3. A system for sensing a physical property as claimed in claim 1, wherein the physical property comprises identity codes of RFID transponders (2A) of objects (2), and the sensors are configured as antennas (31, 32, 33a-b, 34a-d, 35, 41, 42, 43a-b, 44a-d, 45, 51, 52, 53a, 53b, 54a-d, 55) designed for reading the identity codes of the RFID transponders (2A).

4. A system for sensing a physical property as claimed in claim 3, wherein the object (2) comprises at least two RFID transponders (2A).

5. A system for sensing a physical property as claimed in any of the preceding claims, wherein the sensors are configured as substantially rectangular antenna loops.

6. A system for sensing a physical property as claimed in claim 1, wherein the sensing results of the sensing regions (31 - 35, 41 - 45, 51 - 55) are transmitted via sensing signals, and wherein the sensing signals are fed to a detector that is adapted to allocate each sensing signal to a different digit of a position code (BC).

7. A system for sensing a physical property as claimed in claim 6, wherein the detector is adapted to discriminate binary values from the sensing signals and to allocate the binary values to the respective digits of the position code (BC).

8. A system for sensing a physical property as claimed in claim 6, wherein the detector is adapted to allocate the sensing signals as discrete numbers to the respective digits of the position code (BC).

9. A system for sensing a physical property as claimed in claim 1, 2 or 3, further comprising a sensor with a sensing region (20) which covers the entirety of scanning positions (Pij).
